# EUROPEAN PATENT SPECIFICATION

(11) **EP 3 705 678 B1**
(45) Date of publication and mention of the grant of the patent: **02.10.2024**
(21) Application number: 20160739.7
(22) Date of filing: 03.03.2020
(51) Int. Cl.: E06B 9/322, E06B 9/78, F16D 13/08

(54) **OPERATING SYSTEM FOR AN ARCHITECTURAL-STRUCTURE COVERING**
BEDIENUNGSSYSTEM FÜR EINE ARCHITEKTONISCHE STRUKTURABDECKUNG
SYSTÈME DE FONCTIONNEMENT D'UNE COUVERTURE DE STRUCTURE ARCHITECTURALE

(30) Priority: 05.03.2019 US 201962813898 P
(43) Date of publication of application: 09.09.2020
(73) Proprietor: Hunter Douglas Inc., New York, NY 10036 (US)
(72) Inventor: SPRAY, Jeffrey L., 3008 AB Rotterdam (NL); SCHWANDT, Mark, 3008 AB Rotterdam (NL)
(74) Representative: J A Kemp LLP

(56) References cited:
- JP-A- 2011 012 751
- ANONYMOUS: "SPRING CLUTCHES - Tiny Clutch | Helander Products, Inc.", 18 October 2018 (2018-10-18), XP055754349, Retrieved from the Internet <URL:https://web.archive.org/web/20181018152405/http://www.tinyclutch.com/spring-clutches.htm> [retrieved on 20201126]

## Description

### FIELD OF THE DISCLOSURE

The present disclosure relates generally to the field of architectural-structure coverings, and more particularly to methods and apparatuses for an operating system that operates a pull system for moving the covering between extended and retracted positions.

### BACKGROUND

Architectural-structure coverings may selectively cover an architectural structure such as, for example, a window, a doorway, a skylight, a hallway, an archway, a portion of a wall, etc. (collectively an architectural structure without the intent to limit). Generally speaking, architectural-structure coverings may include a covering that can be extendable and retractable, for example, vertically extendable or retractable (e.g., able to be lowered or raised, respectively, in a vertical direction) between an extended position and a retracted position for obscuring and exposing the underlying architectural structure. The architectural-structure covering may further include a bottom rail attached to a lower edge of the covering. The bottom rail may be utilized to add weight along the lower edge of the covering to encourage the covering to drop by gravity during deployment.

To move the covering between the extended and retracted positions, some architectural-structure coverings include a rotatable member (e.g., a rod or a roller). In use, rotation of the rotatable member in a first direction may retract the covering while rotation of the rotatable member in a second, opposite direction may extend the covering. The covering portion of the architectural-structure covering may be gathered or stacked adjacent to, or wrapped around, the rotatable member. For example, some retractable coverings include a plurality of slats that are raised or lowered as lift cords are wrapped about or unwrapped from the rotatable member. The architectural-structure covering may include lift cords which are coupled to the covering portion and the rotatable member. In use, rotation of the rotatable member in a first direction wraps the lift cords about the rotatable member causing the covering portion to retract adjacent to the rotatable member while rotation in a second direction causes the lift cords to unwrap about the rotatable member causing the covering portion to move in an extended configuration. Alternatively, in various embodiment, the covering may be wrapped around the rotatable member in the retracted position. For example, some retractable coverings include a flexible covering suspended from the rotatable member. The covering can either be wrapped about the rotatable member to retract the covering or unwrapped from the rotatable member to extend the covering. Regardless of the form of the retractable covering, rotation of the rotatable member generally causes movement of the covering of the architectural-structure covering. To actuate movement of the rotatable member, and thus the covering of the architectural-structure covering, an operating system may be operably coupled to the rotatable member.

In use, the operating system may be operatively associated with an operating element, for example, a cord, a chain, a tilt wand, or the like. In use, the operating element is manipulated by a human operator to move the covering between the extended and retracted positions.

One known operating system, which is according to the preamble of claim 1, described in United States Patent No. 6,129,131, utilizes an operating element to drive a unidirectional pull system that intermittently rotates a rotatable member (e.g., a drive shaft) in a single direction to, for example, drive lift cords associated with the covering to raise the covering from the extended position to the retracted position. Gravity is utilized to lower the covering from the retracted position to the extended position.

It is with respect to these and other considerations that the present improvements may be useful. The following disclose background art to the invention: JP 2011 012751 A; and Anonymous: "SPRING CLUTCHES - Tiny Clutch, Helander Products, Inc.", 18 October 2018 (2018-10-18), XP055754349, Retrieved from the Internet: URL: https://web.archive.org/web/20181018152405/http:// www.tinyclutch.com/spring-clutches.htm.

### SUMMARY

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

The invention is defined by the claims, and the invention is in particular an operating system according to claim 1. Any aspects, embodiments and examples of the present disclosure which do not fall under the scope of the appended claims do not form part of the invention and are merely provided for illustrative purposes. Disclosed herein is an operating system for use with an architectural-structure covering for moving a covering portion of the architectural-structure covering between an extended position and a retracted position. The covering portion may be any covering now known or hereafter developed. For example, the covering may be a flexible material which, in use, is capable of being extended or moved away from the rotatable member in an extended position and retracted in a retracted position. The operating system may include an operating element (e.g., a cord, a ball chain, etc.) for retracting or raising the covering portion.

### BRIEF DESCRIPTION OF THE DRAWINGS

**FIG. 1** is a top view of a known operating system including a drive mechanism, a clutch mechanism and a driven member;
**FIG. 2** is an exploded, top view of the drive mechanism, the clutch mechanism, and the driven member used in connection with the operating system shown in **FIG. 1**;
**FIG. 3** is a partial, top view of an example embodiment of an improved operating system in accordance with one aspect of the present disclosure, the improved operating system including a collar;
**FIG. 4** is a partially, exploded view of the improved operating system shown in **FIG.** 3;
**FIG. 5** is a partially, top view of the improved operating system shown in **FIG. 3** positioned with a housing portion;
**FIG. 6** is a side view of the collar used in connection with the improved operating system shown in **FIG. 3**; and
**FIG. 7** is a side, perspective view of the collar used in connection with the improved operating system shown in **FIG. 3**.

### DETAILED DESCRIPTION

Embodiments of an example, illustrative operating system for architectural-structure coverings in accordance with various separate and independent principles of the present disclosure will now be described more fully hereinafter with reference to the accompanying drawings, in which embodiments of the present disclosure are presented. The operating system of the present disclosure may, however, be embodied in many different forms within the scope of the appended claims and should not be construed as being limited to the embodiments set forth herein. Rather, these embodiments are provided so that this disclosure will convey certain aspects of the operating system to those skilled in the art. In the drawings, like numbers refer to like elements throughout unless otherwise noted.

As will be generally appreciated by one of ordinary skill in the art, an operating system may be contained within a fully contained module or housing and may support an end of an associated rotatable member. In use, the operating system generally includes a retraction mode and an extension mode. When in the retraction mode, the operating system is operable to raise or retract a covering of the architectural-structure covering. When in the extension mode, the operating system is operable to lower or extend the covering of the architectural-structure covering. The operating system may utilize an operating element, such as a cord, a ball chain, etc. The operating element may include a connector attached to a free end thereof for coupling to, for example, a wand or flexible cord. In use, the operating system may be operatively associated with one or more lift cords in the architectural-structure covering that extends through or are adjacent to the covering. The lift cords are secured at their upper end to associated cord spools that are rotatably driven by a rotatable member such as, for example, a drive shaft. In use, the operating system is used to rotate the rotatable member that in turn rotates the cord spools causing the covering to retract.

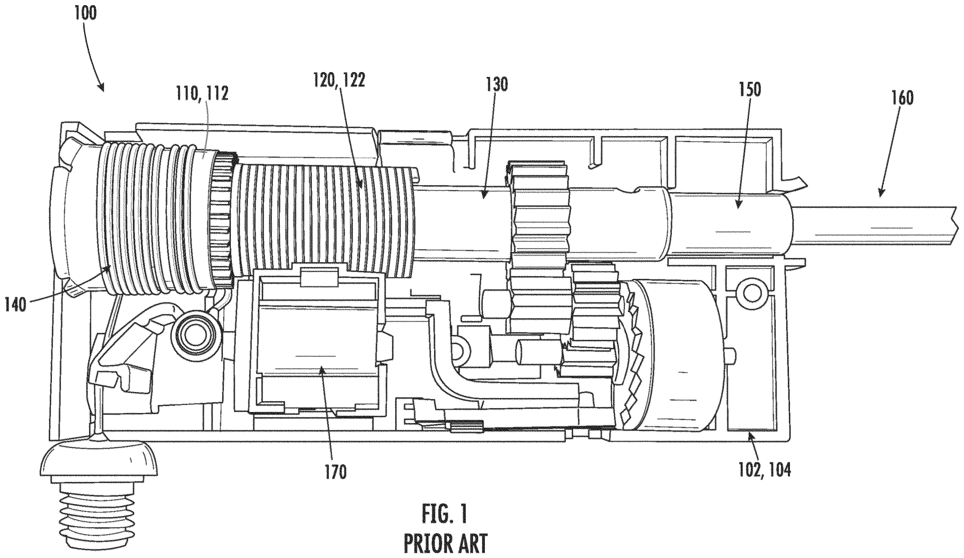

One known operating system used to affect the desired operation of the covering is illustrated in **FIG. 1**. As illustrated, the operating system **100** includes a housing **102**, a drive mechanism **110**, a clutch mechanism **120**, and a driven member **130** operatively coupled to the drive mechanism **110.** The operating system **100** including the drive mechanism **110**, the clutch mechanism **120**, and the driven member **130** are positioned within the housing **102**. The housing **102** includes a first housing portion or base **104** and a second housing portion or cover (not illustrated). In use, the first and second housing portions are operatively coupled to each other such as, for example, via one or more interlocking projections and recesses.

In the illustrated embodiment, the drive mechanism **110** is operatively associated with the operating element **140** so that movement of the operating element **140** rotates the drive mechanism **110**. In the illustrated embodiment, the drive mechanism **110** is in the form of a drive spool **112**. In use, the operating element **140** is coupled to and wrappable about the drive spool **112** so that pulling the operating element **140** rotates the drive spool **112** for retracting the covering.

As illustrated, the clutch mechanism **120** is a wrap spring **122**. In use, the clutch mechanism **120** is coupled to the drive mechanism **110** (e.g., drive spool **112**) and the driven member **130** so that when the operating element **140** is pulled, the drive spool **112** is rotated in a first direction, which in turn rotates the clutch mechanism **120** that in turn rotates the driven member **130**. For example, with the clutch mechanism **120** in the form of a wrap spring **122**, rotation of the drive spool **112** in a first direction by pulling on the operating element **140** causes the wrap spring **122** to tension or tighten against an outer circumference of the drive spool **112** and an outer circumference of the driven member **130** so that rotation of the drive spool **112** is transferred to the driven member **130** (e.g., rotation of the drive spool **112** rotates the driven member **130)**. Meanwhile, rotation of the drive spool **112** in a second or opposite direction say, for example, by releasing the operating element **140**, causes the wrap spring **122** to un-tension or loosen from the outer circumference of the drive spool **112** and the outer circumference of the driven member **130** so that reverse rotation of the drive spool **112** is not transferred to the driven member **130** (e.g., rotation of the drive spool **112** does not rotate the driven member **130)**.

As will be appreciated by one of ordinary skill in the art, the driven member **130** is coupled to an output assembly **150** for coupling to the rotatable member, which is in the form of a drive shaft, (schematically illustrated as **160**) so that rotation of the driven member **130** in the first direction rotates the rotatable member **160**, which in turn is operatively coupled to the covering so that rotation of the rotatable member **160** operates (e.g., moves) the covering. Meanwhile, the operating system **100** may also include a return spring **170** to facilitate retraction of the operating element **140**. In use, extension (e.g., pulling) of the operating element **140** causes the return spring **170** to coil up. Release of the lift cords causes the return spring **170** to rotate the driven member **130**, causing the operating element **140** to retract and wrap about the drive spool **112**. The operating system **100** may also include a clutch/brake assembly that is operatively connected to the driven member **130** to grip the driven member **130** when it would otherwise be allowed to rotate in the second direction or the direction in which the covering would drop toward an extended position.

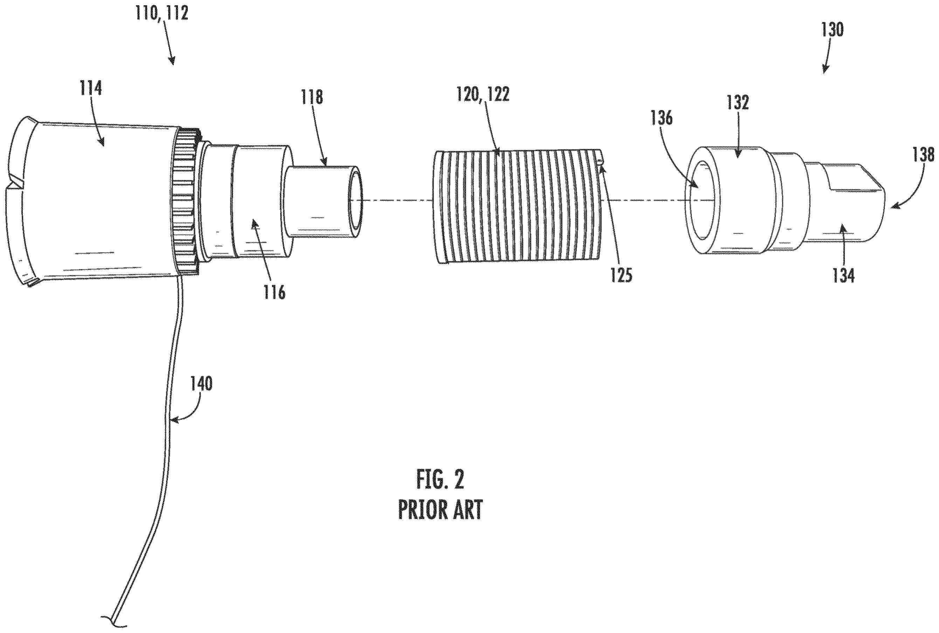

Referring to **FIG. 2****,** additional detailed information regarding the illustrated, known drive spool **112,** driven member **130**, and wrap spring **122** will be described. As illustrated, the drive spool **112** includes a first segment **114** for receiving at least a portion of the operating element **140**, a second segment **116** for interacting with the wrap spring **122**, and a third segment **118** for interacting with the driven member **130**. As illustrated, the first segment **114** has a larger diameter than the second segment **116**, which has a larger diameter than the third segment **118**. That is, the first segment **114** has a first diameter, the second segment **116** has a second diameter, and the third segment **118** has a third diameter, the first diameter is larger than the second diameter, and the second diameter is larger than the third diameter.

Similarly, the driven member **130** has a first segment **132** and a second segment **134**. The first segment **132** has a first diameter, and the second segment **134** has a second diameter, the first diameter being larger than the second diameter. When coupled, the first segment **132** of the driven member **130** has an outer diameter substantially similar to the outer diameter of the second segment **116** of the drive spool **112** so that when assembled, the wrap spring **122** overlies and interacts with the second segment **116** of the drive spool **112** and the first segment **132** of the driven member **130**, as previously described. In the illustrated embodiment, the first segment **132** of the driven member **130** includes a cavity **136** formed in an end thereof for receiving the third segment **118** of the drive spool **112**. In addition, the second segment **134** of the driven member **130** includes a coupling mechanism **138** such as, for example, a cavity for engaging the output assembly **150**.

Additional information on the structure and operation of the operating system **100** and the components thereof, can be found in United States Patent No. 6,129,131 entitled "Control System for Coverings for Architectural Openings".

One common issue associated with the operating system of **FIG. 1** is that the first and second housing portions (first housing portion **104** shown in **FIG. 1**) of the operating system **100** may be misaligned due to, for example, imperfect tolerances. As a result, an end or tail **125 (****FIG. 2****)** of the wrap spring **122** may hit or snag a surface formed at the meeting of the mis-aligned first and second housing portions of the operating system **100**. In turn, this may result in improper operation and/or unwanted noise. For example, during operation, a detectable clicking sound may be heard for every revolution of the wrap spring **122** as the tail **125** is rotated against a surface formed by the mis-aligned first and second housing portions of the operating system **100**. That is, for example, as a result of mis-aligned first and second housing portions, a surface, lip, wall, projection, or the like may be formed in a path of the tail **125** of the wrap spring **122**. Rotation of the wrap spring **122** causing the tail **125** to contact the surface, lip, wall, projection, or the like thus causing, for example, unwanted noise. This noise often results in consumer complaints and product returns.

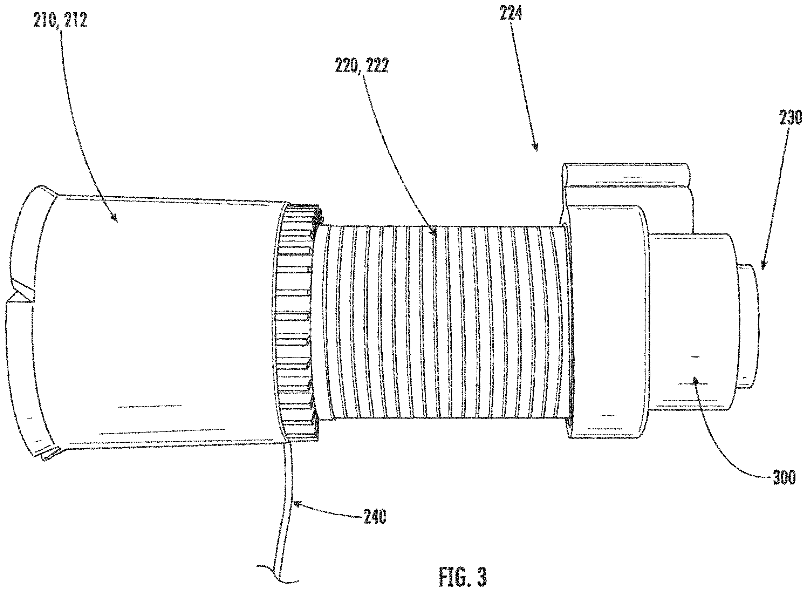

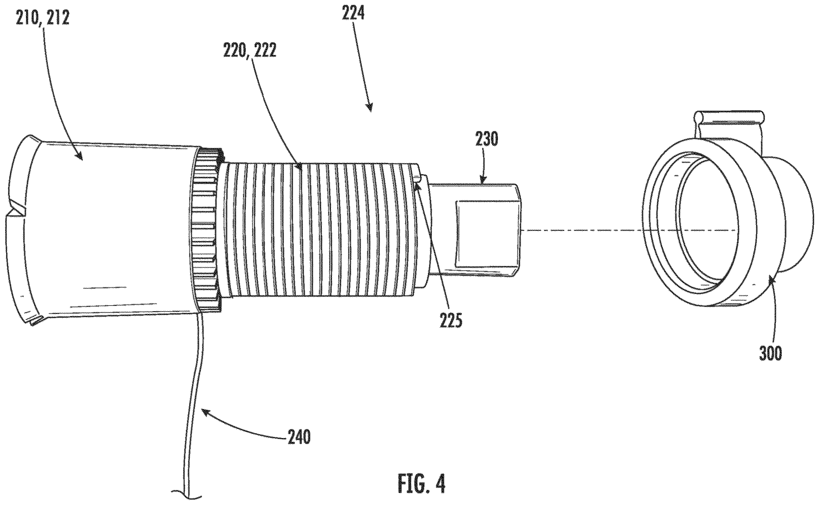

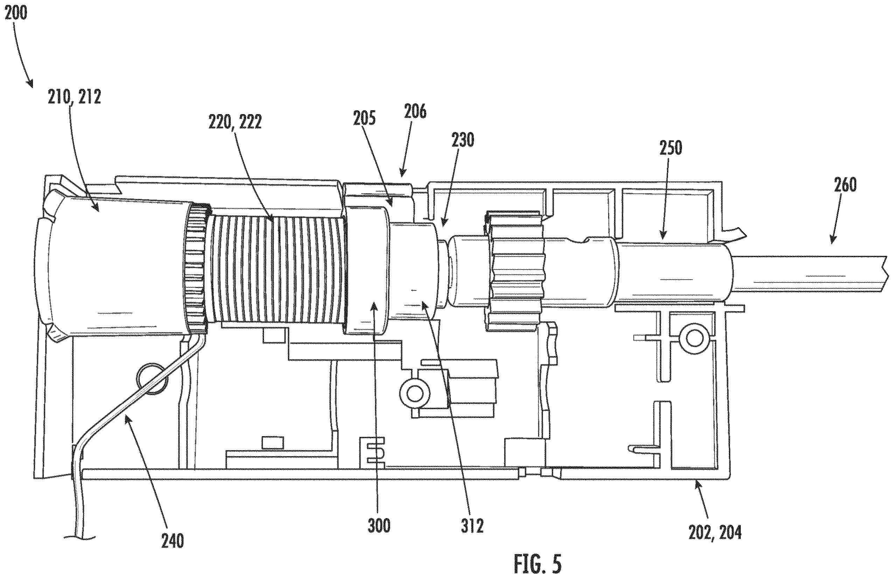

Referring to **FIGS. 3-5**, in accordance with one aspect of the present disclosure, an improved operating system **200 (****FIG. 5****)** is disclosed. In the illustrated embodiment, the operating system **200** includes, *inter alia*, a housing **202**, a drive mechanism **210** (e.g., drive spool **212**), a clutch mechanism **220** (e.g., wrap spring **222**), a driven member **230**, an operating element **240**, and an output assembly **250**. In use, the operating system **200**, including the housing **202**, the drive mechanism **210** (e.g., drive spool **212**), the clutch mechanism **220** (e.g., wrap spring **222**), the driven member **230**, the operating element **240**, and the output assembly **250**, are substantially similar to the housing **102**, the drive mechanism **110** (e.g., drive spool **112**), the clutch mechanism **120** (e.g., wrap spring **122**), the driven member **130**, the operating element **140**, and the output assembly **150** described above in connection with **FIGS. 1** and **2** except as described herein. As such, detailed description of the housing **202**, the drive mechanism **210** (e.g., drive spool **212**), the clutch mechanism **220** (e.g., wrap spring **222**), the driven member **230**, the operating element **240**, and the output assembly **250** are omitted for the sake of brevity.

In addition, as illustrated, the operating system **200** includes a bushing, a collar, or the like **300** (collectively referred to as a collar herein without the intent to limit). In use, the collar **300** is adapted and configured to receive an end portion **224** of the wrap spring **222**, for example, the end portion **224** including a tail **225** of the wrap spring **222**, so that the edge of the wrap spring **222** is covered and thereby shielded from contacting, for example, the first and second housing portions of the operating system **200**. That is, in one embodiment, the collar **300** is adapted and configured to receive an end portion **224** of the wrap spring **222** so that the end portion **224** of the wrap spring **222** is encased or enclosed by the collar **300**.

Additionally, in use, incorporation of the collar **300** facilitates manufacturing of the collar **300** from a first lubricated material while enabling the housing **202** of the operating system **200** to be manufactured from a second lubricated material. For example, in one example embodiment, the collar **300** can be manufactured from a higher lubricated grade of material while enabling the housing **202** to be manufactured from a lesser lubricated grade of material, and thus a less expensive material. For example, the housing **202** may be manufactured from a non-lubricated material. Moreover, the collar **300** ensures that proper friction/drag with the wrap spring **222** is achieved to ensure proper operation of the operating system **200**.

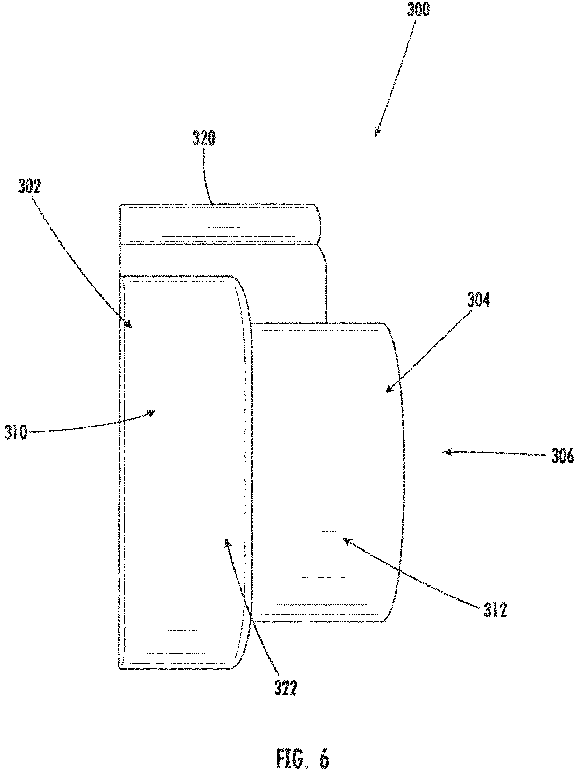

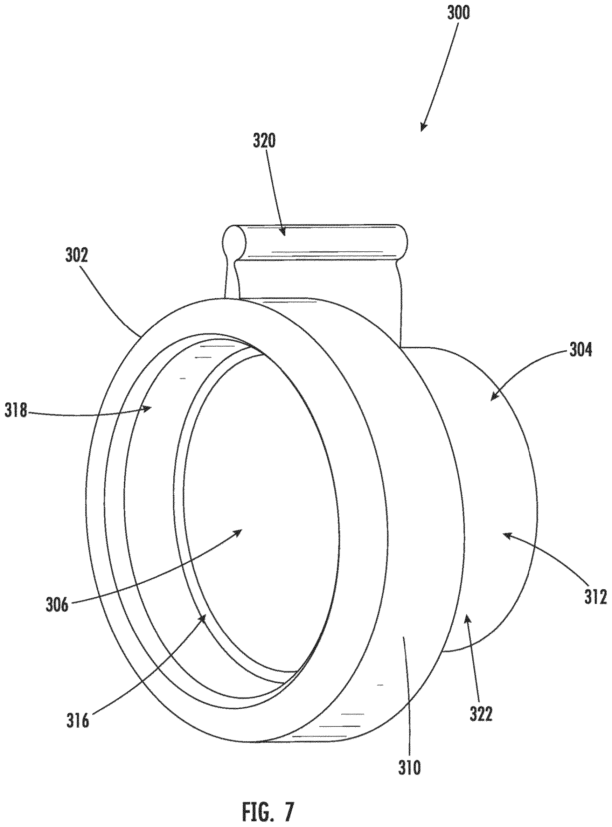

Referring to **FIGS. 6** and **7**, in the illustrated example embodiment, the collar **300** includes a first end **302**, a second end **304**, and a through bore **306** extending from the first end **302** to the second end **304**. In use, the through bore **306** is adapted and configured to enable the driven member **230** to pass through so that the driven member **230** may be coupled, either directly or indirectly, to the rotatable member (schematically illustrated as **260**).

As illustrated in the example embodiment, the collar **300** may include a first segment **310** adjacent to the first end **302** thereof and a second segment **312** adjacent to the second end **304** thereof. In use, the first segment **310** may be diametrically larger than the second segment **312**. That is, the first segment **310** has a first diameter and the second segment **312** has a second diameter, the first diameter being larger than the second diameter. As such, an internally protruding shoulder **316 (****FIG. 7****)** may be formed in the through bore **306** between the larger diameter first segment **310** and the smaller diameter second segment **312**. In use, the internally protruding shoulder **316** creates a stop or resting surface for the end portion **224** of the wrap spring **222**. Meanwhile, as illustrated in **FIGS. 3** and **5****,** the through bore **306** enables the driven member **230** to pass therethrough. As illustrated, the first segment **310** may include an inner surface **318**. In one embodiment, the inner surface **318** has a smooth surface for contacting the wrap spring **222**. In this manner, due to the lubrication of the collar **300**, minimal friction exists between the inner surface **318** of the collar **300** and the wrap spring **222.** In use, the collar **300** may be keyed to the housing **202** (e.g., first housing portion **204**) so that the collar **300** is prevented from rotation relative to the first housing portion **204**. For example, the collar **300** may include a projection **320** extending from an outer surface **322** thereof for interacting with the first housing portion **204** to prevent relative rotation between the collar **300** and the first housing portion **204** so that, in use, relative rotation of the drive spool **212** via pulling the operating element **240** causes, *inter alia*, the wrap spring **222** to tension. That is, in use, the collar **300** is adapted and configured to be seated within the first housing portion **204**. For example, as illustrated in **FIG. 5**, the second segment **312** of the collar **300** may be received within a corresponding arcuate seat **205** formed in the first housing portion **204**. In use, the seat **205** provides increased support of the collar **300**, drive spool **212**, driven member **230**, and wrap spring **222** thus resulting in less bending of the overall assembly of components. In order to prevent relative rotation of the collar **300** with respect to the first housing portion **204**, the projection **320** formed on the collar **300** may contact a corresponding groove **206** formed in the first housing portion **204**.

In use, with relative rotation of the collar **300** and the first housing portion **204** prevented, rotation of the drive spool **212** in a first (e.g., counter-clockwise) direction via, for example, pulling on the operating element **240**, causes the wrap spring **222** to rotate, which causes the wrap spring **222** to tension or tighten (e.g., wind up or clamp down) about an outer circumference of the drive spool **212** and an outer circumference of the driven member **230** so that rotation of the drive spool **212** rotates the driven member **230** (e.g., the drive spool **212**,the wrap spring **222**, and the driven member **230** rotate in unison). Meanwhile, rotation of the drive spool **212** in a second (e.g., clockwise) direction via, for example, by releasing the operating element **240**, causes the wrap spring **222** to un-tension or loosen (e.g., unwind or release) from the outer circumference of the drive spool **212** and the outer circumference of the driven member **230** so that reverse rotation of the drive spool **212** is not transferred to the driven member **230** (e.g., the drive spool **212** rotates relative to the wrap spring **222** and the driven member **230** so that rotation of the drive spool **212** is not transferred to the wrap spring **222** and the driven member **230**). Thus, in use, rotation of the drive spool **212** in the first direction causes the wrap spring **222** to rotate and tension, which causes the wrap spring **222** to constrict about the drive spool **212** so that rotation is transferred between the drive spool **212** and the driven member **230**. Rotation of the drive spool **212** in the second direction causes the wrap spring **222** to come out of tension and thus expand slightly, allowing the drive spool **212** to rotate inside of and relative to the wrap spring **222** so that rotation is not transferred between the drive spool **212** and the driven member **230**.

The foregoing description has broad application. The example operating system may be used with any type of shade, including, but not limited to, roller and stackable shades. Furthermore, the example operating module or system may be used in association with either end of a head rail.

## Claims

1. An operating system (200) for use with an architectural-structure covering, the operating system arranged and configured to move a covering portion of the architectural-structure covering between an extended position and a retracted position, the operating system comprising:
a housing (202);
a drive spool (212);
a driven member (230) operatively coupled to the drive spool;
a wrap spring (222) operatively coupled to the drive spool and the driven member, wherein, in use, rotation of the drive spool in a first direction causes the wrap spring to tension against an outer circumference of the drive spool and an outer circumference of the driven member so that rotation of the drive spool rotates the driven member, and rotation of the drive spool in a second, opposite direction causes the wrap spring to un-tension releasing the outer circumference of the drive spool and the driven member so that reverse rotation of the drive spool is not transferred to the driven member;
wherein the drive spool, the driven member, and the wrap spring are positioned within the housing, **characterised in that** the operating system (200) further comprises
a collar (300) operatively associated with the wrap spring, the collar being adapted and configured to receive an end portion (224) of the wrap spring so that the end portion of the wrap spring is encased by the collar, and so that, in use, the wrap spring rotates relative to the collar and the housing, with rotation of the drive spool in the first direction; wherein
the collar is positioned within the housing.

2. The operating system (200) of claim 1, wherein the collar (300) includes a first end (302), a second end (304), and a through bore (306) extending from the first end to the second end, the through bore is adapted and configured to enable the driven member to pass through the collar so that the driven member can be coupled to a rotatable member (260).

3. The operating system (200) of claim 2, wherein the collar (300) includes a first segment (310) having a first diameter and a second segment (312) having a second diameter, the first diameter being larger than the second diameter.

4. The operating system (200) of claim 2 or 3, wherein the collar (300) includes an internally protruding shoulder (316) formed in the through bore, the internally protruding shoulder forming a stop arranged and configured to receive the end portion (224) of the wrap spring (222).

5. The operating system (200) of any one of claims 1 to 4, wherein the collar (300) is keyed to the housing (202) so that the collar is prevented from rotating relative to the housing.

6. The operating system (200) of claim 5, wherein the collar (300) includes a projection (320) extending from an outer surface (322) of the collar, the projection interacting with the housing (202) to prevent relative rotation between the collar and the housing.

7. The operating system (200) of any one of claims 1 to 6, wherein the collar (300) is manufactured from a lubricated material.

8. The operating system (200) of any one of claims 1 to 7, wherein the housing (202) is manufactured from a non-lubricated material.

9. The operating system (200) of any one of claims 1 to 8, wherein the drive spool (212) is operatively associated with an operating element (240), the operating element being coupled to and wrappable about the drive spool so that movement of the operating element rotates the drive spool to move the covering portion of the architectural-structure covering from the extended position to the retracted position.

10. The operating system (200) of claim 9 wherein movement of the operating element (240) in a first direction causes the drive spool (212) to rotate in the first direction.

## Patentansprüche

1. Betätigungssystem (200) zur Verwendung mit einer Bauwerksabdeckung, wobei das Betätigungssystem dafür ausgelegt und konfiguriert ist, einen Abdeckungsabschnitt der Bauwerksabdeckung zwischen einer ausgefahrenen Position und einer eingefahrenen Position zu bewegen, wobei das Betätigungssystem umfasst:
ein Gehäuse (202);
eine Antriebsspule (212);
ein angetriebenes Element (230), das funktionell mit der Antriebsspule gekoppelt ist;
eine Schlingfeder (222), die funktionsfähig mit der Antriebsspule und dem angetriebenen Element gekoppelt ist, wobei im Gebrauch die Drehung der Antriebsspule in einer ersten Richtung bewirkt, dass die Schlingfeder gegen einen Außenumfang der Antriebsspule und einen Außenumfang des angetriebenen Elements gespannt wird, so dass die Drehung der Antriebsspule das angetriebene Element dreht, und eine Drehung der Antriebsspule in eine zweite, entgegengesetzte Richtung bewirkt, dass sich die Schlingfeder entspannt und den Außenumfang der Antriebsspule und des angetriebenen Elements freigibt, so dass eine umgekehrte Drehung der Antriebsspule nicht auf das angetriebene Element übertragen wird;
wobei die Antriebsspule, das angetriebene Element und die Schlingfeder innerhalb des Gehäuses angeordnet sind,
**dadurch gekennzeichnet, dass** das Betätigungssystem (200) ferner umfasst:
einen Kragen (300), der funktionell der Schlingfeder zugeordnet ist, wobei der Kragen dafür ausgelegt und konfiguriert ist, einen Endabschnitt (224) der Schlingfeder aufzunehmen, so dass der Endabschnitt der Schlingfeder von dem Kragen umschlossen wird, und so dass sich die Schlingfeder im Gebrauch relativ zu dem Kragen und dem Gehäuse dreht, wobei sich die Antriebsspule in die erste Richtung dreht; wobei
der Kragen innerhalb des Gehäuses angeordnet ist.

2. Betätigungssystem (200) nach Anspruch 1, wobei der Kragen (300) ein erstes Ende (302), ein zweites Ende (304) und eine Durchgangsbohrung (306) enthält, die sich von dem ersten Ende zu dem zweiten Ende erstreckt, wobei die Durchgangsbohrung dafür ausgelegt und konfiguriert ist, es dem angetriebenen Element zu ermöglichen, durch den Kragen zu gehen, so dass das angetriebene Element mit einem drehbaren Element (260) gekoppelt werden kann.

3. Betätigungssystem (200) nach Anspruch 2, wobei der Kragen (300) ein erstes Segment (310) mit einem ersten Durchmesser und ein zweites Segment (312) mit einem zweiten Durchmesser enthält, wobei der erste Durchmesser größer ist als der zweite Durchmesser.

4. Betätigungssystem (200) nach Anspruch 2 oder 3, wobei der Kragen (300) eine in der Durchgangsbohrung ausgebildete, nach innen vorspringende Schulter (316) enthält, wobei die nach innen vorstehende Schulter einen Anschlag bildet, der so angeordnet und ausgelegt ist, dass er den Endabschnitt (224) der Schlingfeder (222) aufnimmt.

5. Betätigungssystem (200) nach einem der Ansprüche 1 bis 4, wobei der Kragen (300) mit dem Gehäuse (202) verkeilt ist, so dass der Kragen an einer Drehung relativ zum Gehäuse gehindert ist.

6. Betätigungssystem (200) nach Anspruch 5, wobei der Kragen (300) einen Vorsprung (320) enthält, der sich von einer Außenfläche (322) des Kragens erstreckt, wobei der Vorsprung mit dem Gehäuse (202) zusammenwirkt, um eine relative Drehung zwischen dem Kragen und dem Gehäuse zu verhindern.

7. Betätigungssystem (200) nach einem der Ansprüche 1 bis 6, wobei der Kragen (300) aus einem geschmierten Material hergestellt ist.

8. Betätigungssystem (200) nach einem der Ansprüche 1 bis 7, wobei das Gehäuse (202) aus einem nicht-geschmierten Material hergestellt ist.

9. Betätigungssystem (200) nach einem der Ansprüche 1 bis 8, wobei die Antriebsspule (212) operativ einem Betätigungselement (240) zugeordnet ist, wobei das Betätigungselement mit der Antriebsspule gekoppelt und um diese herumwickelbar ist, so dass eine Bewegung des Betätigungselements die Antriebsspule dreht, um den Abdeckungsabschnitt der Bauwerksabdeckung von der ausgefahrenen Position in die eingezogene Position zu bewegen.

10. Betätigungssystem (200) nach Anspruch 9, wobei die Bewegung des Betätigungselements (240) in eine erste Richtung die Antriebsspule (212) veranlasst, sich in die erste Richtung zu drehen.

## Revendications

1. Système de fonctionnement (200) destiné à être utilisé avec une couverture de structure architecturale, le système de fonctionnement étant agencé et configuré pour mettre en mouvement une partie de couverture de la couverture de structure architecturale entre une position étendue et une position rétractée, le système de fonctionnement comprenant :
un boîtier (202) ;
une bobine d'entraînement (212) ;
un organe entraîné (230) fonctionnellement couplé à la bobine d'entraînement ;
un ressort d'enroulement (222) fonctionnellement couplé à la bobine d'entraînement et à l'organe entraîné, dans lequel, durant l'utilisation, la rotation de la bobine d'entraînement dans une première direction amène le ressort d'enroulement à se tendre contre une circonférence extérieure de la bobine d'entraînement et une circonférence extérieure de l'organe entraîné de telle façon que la rotation de la bobine d'entraînement met en rotation l'organe entraîné, et la rotation de la bobine d'entraînement dans une seconde direction opposée amène le ressort d'enroulement à se détendre, libérant la circonférence extérieure de la bobine d'entraînement et de l'organe entraîné de telle façon que la rotation inverse de la bobine d'entraînement n'est pas transférée à l'organe entraîné ;
dans lequel la bobine d'entraînement, l'organe entraîné, et le ressort d'enroulement sont positionnés à l'intérieur du boîtier,
**caractérisé en ce que** le système de fonctionnement (200) comprend en outre
un collier (300) fonctionnellement associé au ressort d'enroulement, le collier étant adapté et configuré pour recevoir une partie d'extrémité (224) du ressort d'enroulement de telle façon que la partie d'extrémité du ressort d'enroulement est recouverte par le collier, et de telle façon que, durant l'utilisation, le ressort d'enroulement entre en rotation relativement au collier et au boîtier, avec la rotation de la bobine d'entraînement dans la première direction ; dans lequel le collier est positionné à l'intérieur du boîtier.

2. Système de fonctionnement (200) de la revendication 1, dans lequel le collier (300) inclut une première extrémité (302), une seconde extrémité (304), et un alésage traversant (306) s'étendant depuis la première extrémité jusqu'à la seconde extrémité, l'alésage traversant est adapté et configuré pour permettre à l'organe entraîné de passer à travers le collier de telle façon que l'organe entraîné peut être couplé à un organe rotatif (260).

3. Système de fonctionnement (200) de la revendication 2, dans lequel le collier (300) inclut un premier segment (310) ayant un premier diamètre et un second segment (312) ayant un second diamètre, le premier diamètre étant plus grand que le second diamètre.

4. Système de fonctionnement (200) de la revendication 2 ou 3, dans lequel le collier (300) inclut un épaulement saillant de façon interne (316) formé dans l'alésage traversant, l'épaulement saillant de façon interne formant une butée agencée et configurée pour recevoir la partie d'extrémité (224) du ressort d'enroulement (222).

5. Système de fonctionnement (200) de l'une quelconque des revendications 1 à 4, dans lequel le collier (300) est claveté sur le boîtier (202) de telle façon que le collier est empêché d'entrer en rotation relativement au boîtier.

6. Système de fonctionnement (200) de la revendication 5, dans lequel le collier (300) inclut une saillie (320) s'étendant depuis une surface extérieure (322) du collier, la saillie interagissant avec le boîtier (202) pour empêcher la rotation relative entre le collier et le boîtier.

7. Système de fonctionnement (200) de l'une quelconque des revendications 1 à 6, dans lequel le collier (300) est fabriqué d'un matériau lubrifié.

8. Système de fonctionnement (200) de l'une quelconque des revendications 1 à 7, dans lequel le boîtier (202) est fabriqué d'un matériau non lubrifié.

9. Système de fonctionnement (200) de l'une quelconque des revendications 1 à 8, dans lequel la bobine d'entraînement (212) est fonctionnellement associée à un élément de fonctionnement (240), l'élément de fonctionnement étant couplé à la bobine d'entraînement, et enroulable autour de celle-ci, de telle façon que le mouvement de l'élément de fonctionnement met en rotation la bobine d'entraînement pour mettre en mouvement la partie de couverture de la couverture de structure architecturale de la position étendue à la position rétractée.

10. Système de fonctionnement (200) de la revendication 9, dans lequel le mouvement de l'élément de fonctionnement (240) dans une première direction amène la bobine d'entraînement (212) à entrer en rotation dans la première direction.
